Europäisches Patentamt

European Patent Office

Office européen des brevets

(19)

(11) Veröffentlichungsnummer: **0 031 789**
**B1**

# (12) EUROPÄISCHE PATENTSCHRIFT

(45) Veröffentlichungstag der Patentschrift:
08.05.85

(21) Anmeldenummer: 80730002.5

(22) Anmeldetag: 08.01.80

(51) Int. Cl.⁴: **H 01 B 7/28**

(54) Längswasserdichtes elektrisches Kabel und Verfahren zu seiner Herstellung.

(30) Priorität: 20.12.79 DE 2951722

(43) Veröffentlichungstag der Anmeldung:
08.07.81 Patentblatt 81/27

(45) Bekanntmachung des Hinweises auf die Patenterteilung:
08.05.85 Patentblatt 85/19

(84) Benannte Vertragsstaaten:
AT CH FR GB IT SE

(56) Entgegenhaltungen:
AT - A - 331 883
DE - A - 1 790 202
DE - A - 1 936 871
DE - A - 1 936 872
DE - A - 2 216 139
DE - C - 847 348
FR - A - 2 378 337
FR - A - 2 456 375

(73) Patentinhaber: Siemens Aktiengesellschaft, Berlin und München Wittelsbacherplatz 2, D-8000 München 2 (DE)

(72) Erfinder: Polle, Hubert, Dr., Heimatring 42,
D-8630 Coburg (DE)

## Beschreibung

Die Erfindung bezieht sich auf ein elektrisches Kabel, dessen Mantel eine aus kunststoffisolierten Leitern bestehende Seele umschließt, wobei in den Hohlräumen zwischen den einzelnen Adern bzw. zwischen der Seele und dem Mantel mindestens teilweise eine pulverförmige Mischung aus einem höheren Anteil an dielektrisch hochwertigen hochverzellten Polyolefinen, insbesondere Polyäthylen oder Polystyrol, und aus einem niedrigeren Anteil an bei Wasseranwesenheit quellfähigen Stoffen eingefüllt ist.

Bei nicht gefüllten Kabeln mit kunststoffisolierten Adern können bei Mantelbeschädigungen unter ungünstigen Umständen in kürzester Zeit weite Kabelstrecken mit Wasser vollaufen. Hierdurch kommt es bei Nachrichtenkabeln zu erheblichen Beeinträchtigungen der Übertragungseigenschaften. Eine Reparatur kann in einem solchen Falle sehr aufwendig werden.

Aus diesem Grunde ist man bemüht, die Längsausbreitung des Wassers behindernde Substanzen in die Kabel zu füllen. Die zahlreiche Literatur auf diesem Gebiet zeigt aber, wie schwierig eine in der Praxis einwandfreie Lösung dieses Problems ist.

Eine der Methoden, mit denen man die Längsdichtigkeit eines Kabels sicherstellen will, besteht im diskontinuierlichen oder kontinuierlichen Einfüllen von Quellpulver in die Hohlräume der Kabelseele (DE-OS 20 06 359). Bei Eintritt von Wasser quillt das Pulver auf ein Mehrfaches seines ursprünglichen Volumens und bildet so einen Stopfen, der das weitere Vordringen des Wassers im Kabel verhindert. Nun sind aber die Quellpulver zum Teil relativ teuer, so daß sie den Kabelpreis merklich beeinflussen. Jede Kabelfüllung verschlechtert die Übertragungseigenschaften des Kabels. Diese Verschlechterung ist besonders groß bei Verwendung der dielektrisch minderwertigen Quellpulver.

Daher ist es auch schon bekannt, ein Stoffgemisch zu verwenden, von dem nur eine Komponente ein quellfähiges Material bildet (DE-OS 2 216 139). Es ist ferner bekannt, anstelle quellfähiger Substanzen nicht benetzbare, also hydrophobe Stoffe, die ein Kapillarsystem bilden, zu verwenden (DE-OS 2 459 597). Derartige Kapillarsysteme müssen aber, wenn sie voll wirksam sein sollen, eine relativ hohe Dichte aufweisen. Diese Forderung ist fertigungstechnisch schwer zu erfüllen. Außerdem bewirken sie eine starke Verschlechterung der Übertragungseigenschaften.

Ferner sind dielektrisch hochwertige Einbettstoffe bekannt (DE-PS 1 936 871), die aus verzellt geschäumten, kugelförmigen Partikeln bestehen.

Die bekannten Pulver haben weitgehend kugelförmige Gestalt und ziemlich glatte Oberflächen. Schüttungen aus solchen Teilchen schließen nicht sehr viel Luft ein und haben deshalb nur eine mäßig geringere Dielektrizitätszahl gegenüber kompaktem Material. Da die beizumischenden Quellpulver dielektrisch nicht sehr hochwertig sind, würde sich insgesamt eine Kabelfüllung ergeben, die in der Dielektrizitätszahl nicht oder nur geringfügig besser ist als das derzeit verwendete Petrolat. Der Verlustfaktor wäre ebenso deutlich ungünstiger.

Der Erfindung liegt daher die Aufgabe zugrunde, ein Pulvergemisch anzugeben, das von den Vorteilen der bekannten Substanzen zwar Gebrauch macht, ohne jedoch die Nachteile in nennenswertem Umfange hervortreten zu lassen. Diese Aufgabe wird gemäß der Erfindung dadurch gelöst, daß das hochverzellte Polyolefin entweder durch Mahlen eine stark zerklüftete Oberfläche aufweist oder offenporig hergestellt ist. Das gemahlene oder offenporig hergestellte Zellpolyolefin-Pulver hat den Vorteil, daß es bei eindringendem Wasser durch den Wasserdruck zusamengeschoben wird und so eine erste Barriere gegen das eingedrungene Wasser bildet.

Durch das nicht oder nur schlecht benetzbare Kunststoffpulver wird ferner in den Kabelzwickeln ein Labyrinth gebildet. Die engen Strömungsquerschnitte und die günstigen Kapillareigenschaften bewirken, daß das bei einer Mantelbeschädigung in die Kabelseele eindringende Wasser nur sehr langsam vorankommt, so daß dem quellfähigen Gemischanteil genügend Zeit zum Aufquellen und damit zum Abdichten des Kabelbereiches gegeben ist. Trotz der guten Dichtwirkung hat die erfindungsgemäße Zwickelfüllung nur eine DK von ca. $\varepsilon = 1,3$, und mit ihr werden die Übertragungseigenschaften gegenüber ungefüllten Kabeln nur noch geringfügig herabgesetzt. Alle bisher bekannten Füllungen haben dagegen deutlich höhere Werte der DZ und ebenfalls eine deutliche Verschlechterung der Übertragungseigenschaften zur Folge.

Bevorzugt wird man ein Gemisch verwenden, bei dem die beiden Gemischteile in einem Volumenverhältnis von 70 : 30 stehen. Es sind aber auch Gemische mit einem noch erheblich geringeren Anteil von Quellpulver denkbar.

Durch elektrostatische Anziehung werden die Quellpulverpartikel an die Polyolefinteilchen gebunden, wodurch unangenehmes Stauben des Pulvers weitgehend vermieden wird. Um dieses Stauben noch stärker zu verhindern, können die Teilchen des Polyolefinpulvers vor dem Vermischen mit dem Quellpulver auch mit einem dünnen Ölfilm (z. B. Paraffinöl) überzogen werden. Das würde gleichzeitig auch die Haftung des Pulvergemisches an den Adern verbessern. Es ist ferner möglich, die Teilchen untereinander und mit den Adern durch dünnste, wasserdurchlässige Lacke, z. B. Zelluloselacke, zu verbinden, indem die Teilchen des Gemisches mit einem wasserdurchlässigen Lack überzogen sind.

Als quellfähige Komponente des Gemisches wird man ein superabsorbierendes Polymer-Pulver (ein sogenanntes SAP oder Superslurper) bevorzugen. Diese Stoffe können Wasser in der Größe des 100- bis 1000fachen ihres Eigengewichtes absorbieren. Das Material dieser Stoffe, der sogenannten SAP's ist Stärke, Zellulose und synthetische Polymere, insbesondere vernetztes Polyacrylat.

Um das Füllpulvergemisch in die Hohlräume des Kabels einzubringen, kann man neben dem üblichen Beschichten der Adern, Vierer oder Grundbündel das Gemisch in einer geeigneten Flüssigkeit suspendieren, die nicht wäßrig und leicht verdampfbar ist. Auf diese Weise kann das Pulvergemisch in die Hohlräume des Kabels eingespült werden. Die Bestandteile des Pulvers müssen in diesem Falle eine genügende Dichte aufweisen, weil sie sonst nicht lange genug schwebend in der Flüssigkeit gehalten werden können. Das Zell-Polyolefin-Pulver muß so fein gemahlen werden, daß die Teilchen nur noch wenig geschlossene Zellen enthalten, oder man muß dafür Sorge tragen, daß das Zell-Polyolefin offenporig hergestellt wird. Als Flüssigkeit wird Äthanol oder ein passender Fluorkohlenstoff (Freon, Frigen) vorgeschlagen. Das Einbringen dieser Suspension in die Seele kann mit Hilfe eines Druckrohres erfolgen. Man kann die Seele aber auch durch die kräftig umgewälzte oder beispielsweise mit Ultraschall erregte Suspension führen. Um das Lösungsmittel zu entfernen, wird man die Seele durch einen Unterdruckbereich hindurchführen, in der das Dispersionsmittel verdampft und wiedergewonnen werden kann.

### Patentansprüche

1. Elektrisches Kabel, dessen Mantel eine aus kunststoffisolierten Leitern bestehende Seele umschließt, wobei in den Hohlräumen zwischen den einzelnen Adern bzw. zwischen der Seele und dem Mantel mindestens teilweise eine pulverförmige Mischung aus einem höheren Anteil an dielektrisch hochwertigen hochverzellten Polyolefinen, insbesondere Polyäthylen oder Polystyrol, und aus einem niedrigeren Anteil an bei Wasseranwesenheit quellfähigen Stoffen eingefüllt ist, dadurch gekennzeichnet, daß das hochverzellte Polyolefin entweder durch Mahlen eine stark zerklüftete Oberfläche aufweist oder offenporig hergestellt ist.

2. Elektrisches Kabel nach Anspruch 1, dadurch gekennzeichnet, daß die beiden Gemischteile in einem Volumenverhältnis von 70 : 30 stehen.

3. Elektrisches Kabel nach Anspruch 1, dadurch gekennzeichnet, daß die Teilchen des gemahlenen, hochverzellten Polyolefins mit einem dünnen Ölfilm überzogen sind.

4. Elektrisches Kabel nach den Ansprüchen 1 bis 3, dadurch gekennzeichnet, daß die Teilchen des Gemisches mit einem wasserdurchlässigen Lack überzogen sind.

5. Elektrisches Kabel nach Anspruch 1 oder 2, dadurch gekennzeichnet, daß daß die quellfähige Komponente des Gemisches ein superabsorbierendes Polymer-Pulver ist.

### Claims

1. An electric cable, the sheath of which surrounds a core which consists of synthetic resin-insulated conductors, wherein the cavities between the individual strands of the core, or between the core and the sheathing, are at least partially filled wiht a powdery mixture, which consists of a large portion of dielectric high-value, highly-cellular polyolefines, in particular polyethylene, or polystyrene, and a smaller portion of substances which are capable of swelling in the presence of moisture, characterised in that the highly-cellular polyolefine either has a surface which is highly fissured by grinding, or is so produced as to have open pores.

2. An electric cable as claimed in Claim 1, characterised in that the two portions of the mixture have a volume ratio of 70 : 30.

3. An electric cable as claimed in Claim 1, characterised in that the particles of the ground, highly-cellular polyolefine are coated with a thin oil film.

4. An electric cable as claimed in Claims 1 to 3, characterised in that the particles of the mixture are coated with a water-permeable lacquer.

5. An electric cable as claimed in Claim 1 or Claim 2, characterised in that the component of the mixture, which is capable of swelling, is a superabsorbing polymer powder.

### Revendications

1. Câble électrique dont la gaine entoure un assemblage de conducteurs isolés par de la matière plastique, un mélange pulvérulent, constitué d'une grande proportion de polyoléfines ayant une constante diélectrique élevée et ayant une structure trés cellulaire, notamment de polyéthylène ou de polystyrène, et d'une proportion plus petite de substances susceptibles de gonfler en présence d'eau, étant introduit dans les espaces vides entre les conducteurs isolés et entre l'assemblage de conducteurs et la gaine, caractérisé en ce que la polyoléfine ayant une structure très cellulaire présente, par broyage, une surface très fissurée ou est fabriquée à pores ouverts.

2. Câble électrique suivant la revendication 1, caractérisé en ce que les deux parties du mélange sont présentes en un rapport volumétrique de 70 : 30.

3. Câble électrique suivant la revendication 1, caractérisé en ce que les particules de la polyoléfine, qui a une structure très cellulaire et qui a été broyée, sont revêtues d'une mince pellicule d'huile.

4. Câble électrique suivant les revendications 1 à 3, caractérisé en ce que les particules du mélange sont revêtues d'un vernis perméable à l'eau.

5. Câble électrique suivant la revendication 1 ou 2, caractérisé en ce que les constituants du mélange qui sont susceptibles de gonfler, sont une poudre de polymères super-absorbante.